# EUROPEAN PATENT APPLICATION

(11) **EP 4 394 060 A1**
(43) Date of publication of application: **03.07.2024**
(21) Application number: 23861685.8
(22) Date of filing: 30.10.2023
(51) Int. Cl.: C21D 9/40, C21D 1/18, C21D 1/42

(54) **METHOD FOR INDUCTIVELY HEATING RING-SHAPED MEMBER AND METHOD FOR MANUFACTURING RING-SHAPED MEMBER, RING-SHAPED MEMBER, BEARING, INDUCTIVE HEATING DEVICE, METHOD FOR MANUFACTURING BEARING, METHOD FOR MANUFACTURING VEHICLE, AND METHOD FOR MANUFACTURING MECHANICAL DEVICE**

(30) Priority: 31.10.2022 JP 2022174235
(71) Applicant: NSK Ltd., Tokyo 141-8560 (JP)
(72) Inventor: ONO, Naoyuki, Fujisawa-shi, Kanagawa 251-8501 (JP); ZHANG, Wenyu, Fujisawa-shi, Kanagawa 251-8501 (JP); KAWAKAMI, Kinya, Fujisawa-shi, Kanagawa 251-8501 (JP); IZUMI, Shinji, Fujisawa-shi, Kanagawa 251-8501 (JP)
(74) Representative: Grünecker Patent- und Rechtsanwälte PartG mbB
(86) International application number: PCT/JP2023/039097
(87) International publication number: WO 2024/095961

(57) **Abstract**

A ring-shaped member is induction-heated by supplying a current to an induction coil. An induction heating step includes induction-heating the ring-shaped member using an induction coil (17) disposed at a radially inward position of the ring-shaped member in a state in which no substantial coil is disposed at a radially outward position of the ring-shaped member, or induction-heating the ring-shaped member using an induction coil (18) disposed at the radially outward position of the ring-shaped member in a state in which no substantial coil is disposed at the radially inward position of the ring-shaped member. Effective lengths of the induction coils (17, 18) are set to be larger than an axial length of the ring-shaped member.

## Description

### [Technical Field]

The present invention relates to a method for induction-heating a metal ring-shaped member such as an outer ring or an inner ring constituting a bearing, for example.

Priority is claimed on Japanese Patent Application No. 2022-174235, filed October 31, 2022, the content of which is incorporated herein by reference.

### [Background Art]

For example, an outer ring and an inner ring constituting a bearing are subjected to quenching processing and tempering processing in order to improve a toughness of a core portion while securing a strength and a hardness, particularly a hardness on a raceway surface which comes into contact with a rolling body. Both the quenching processing and the tempering processing are performed by heating a ring-shaped member (workpiece) such as an outer ring or an inner ring to a predetermined temperature, retaining it thereat for a predetermined time, and then cooling it.

Japanese Patent Application, Publication No. 2019-185882 discloses a method for induction-heating a ring-shaped member by respectively disposing a radially outer side coil portion and a radially inner side coil portion which are electrically connected in series on a radially outward side and on a radially inward side of a ring-shaped member (short tube-shaped workpiece) and electrifying the radially outer side coil portion and the radially inner side coil portion. In the method disclosed in Japanese Patent Application, Publication No. 2019-185882, since the radially outer side coil portion and the radially inner side coil portion are electrically connected in series, values of currents flowing in the radially outer side coil portion and the radially inner side coil portion can be made equivalent to each other so that a radially outer side region and a radially inner side region of a ring-shaped member can be heated at the same time substantially under the same conditions.

### [Citation List]

### [Patent Document]

[Patent Document 1]
Japanese Patent Application, Publication No. 2019-185882

### [Summary of Invention]

### [Technical Problem]

However, in the method disclosed in Japanese Patent Application, Publication No. 2019-185882, when targeted at ring-shaped members having different radial thicknesses depending on a position in an axial direction, such as an outer ring having an outer ring raceway on an inner circumferential surface and an inner ring having an inner ring raceway on an outer circumferential surface, a temperature increase rate of a part having a larger radial thickness becomes lower than a temperature increase rate of a part having a smaller radial thickness. For this reason, it is difficult to evenly heat an entire ring-shaped member.

In such induction heating of a ring-shaped member, it is conceivable that a generatrix shape of an inner circumferential surface of a radially outer side coil portion be shaped along a generatrix shape of an outer circumferential surface of the ring-shaped member and a generatrix shape of an outer circumferential surface of a radially inner side coil portion be shaped along a generatrix shape of an inner circumferential surface of the ring-shaped member. If the value of a current supplied to a coil is reduced, the difference in temperature increase rate of a ring-shaped member according to the position in the axial direction may be kept down, but this will lead to decrease in productivity. In addition, there is a need to accurately regulate a positional relationship between the outer and inner side coil portions and the ring-shaped member. When heating ring-shaped members having different diameters or shapes, there is a need to prepare coils matching the ring-shaped members. For this reason, when targeted at a small lot of ring-shaped members, a problem such as increase in manufacturing costs arises.

An object of an aspect of the present invention is to provide an induction heating method in which an entire ring-shaped member can be heated substantially evenly and efficiently.

### [Solution to Problem]

An induction heating method for a ring-shaped member according to an aspect of the present invention includes a step of induction-heating a ring-shaped member by supplying a current to an induction coil. The induction heating step includes induction-heating the ring-shaped member using the induction coil disposed at a radially inward position of the ring-shaped member in a state in which no substantial coil is disposed at a radially outward position of the ring-shaped member, or induction-heating the ring-shaped member using the induction coil disposed at the radially outward position of the ring-shaped member in a state in which no substantial coil is disposed at the radially inward position of the ring-shaped member. An effective length of the induction coil is set to be larger than an axial length of the ring-shaped member.

An induction heating method for a ring-shaped member according to another aspect of the present invention includes a step of preparing a first coil disposed at a radially inward position of a ring-shaped member and a second coil disposed at a radially outward position of the ring-shaped member, a first heating step of induction-heating the ring-shaped member by supplying a current to one coil among the first coil and the second coil such that at least a part of the ring-shaped member reaches a first target temperature, and a second heating step of induction-heating the ring-shaped member by supplying a current to another coil among the first coil and the second coil after the first heating step such that at least a part of the ring-shaped member reaches a second target temperature higher than the first target temperature.

In the induction heating method for a ring-shaped member according to the aspects of the present invention, the ring-shaped member can serve as an inner ring or an outer ring of a rolling bearing such as an angular contact ball bearing, a deep groove-type ball bearing, a roller bearing, or a conical roller bearing.

Alternatively, in the induction heating method for a ring-shaped member according to the aspects of the present invention, the ring-shaped member can also serve as an outer ring or an inner ring of a double-row rolling bearing, a sliding bearing, or the like.

In the induction heating method for a ring-shaped member according to the aspects of the present invention, the ring-shaped member can serve as the outer ring, and after the radially inside heating step is performed, the radially outside heating step can be performed.

Alternatively, in the induction heating method for a ring-shaped member according to the aspects of the present invention, the ring-shaped member can serve as the inner ring, and after the radially inside heating step is performed, the radially outside heating step can be performed.

In a manufacturing method for a ring-shaped member according to another aspect of the present invention, in order to manufacture a ring-shaped member, the ring-shaped member is subjected to heat treatment such as quenching, tempering, annealing, and/or normalizing by heating the ring-shaped member using the induction heating method for a ring-shaped member according to the aspect of the present invention.

In a manufacturing method for a rolling bearing according to another aspect of the present invention, in order to manufacture a rolling bearing including an inner ring having an inner ring raceway on an outer circumferential surface, an outer ring having an outer ring raceway on an inner circumferential surface, and a plurality of rolling bodies rotatably disposed between the inner ring raceway and the outer ring raceway, the inner ring and/or the outer ring is subjected to heat treatment by heating the inner ring and/or the outer ring using the induction heating method for a ring-shaped member according to the aspect of the present invention.

In a manufacturing method for a vehicle according to another aspect of the present invention, in order to manufacture a vehicle including a ring-shaped member, the ring-shaped member is subjected to heat treatment by heating the ring-shaped member using the induction heating method for a ring-shaped member according to the aspect of the present invention.

In a manufacturing method for a mechanical device according to another aspect of the present invention, in order to manufacture a mechanical device including a ring-shaped member, the ring-shaped member is subjected to heat treatment by heating the ring-shaped member using the induction heating method for a ring-shaped member according to the aspect of the present invention.

An induction heating apparatus for a ring-shaped member according to another aspect of the present invention includes a first coil that is disposed at a radially inward position of the ring-shaped member, a second coil that is disposed at a radially outward position of the ring-shaped member, and a power source device that supplies a current to the first coil and the second coil. The power source device includes a first mode of induction-heating the ring-shaped member by supplying a current to one coil among the first coil and the second coil such that at least a part of the ring-shaped member reaches a first target temperature, and a second mode of induction-heating the ring-shaped member by supplying a current to another coil among the first coil and the second coil such that at least a part of the ring-shaped member reaches a second target temperature higher than the first target temperature.

### [Advantageous Effects of Invention]

According to the induction heating method for a ring-shaped member according to the aspects of the present invention, the entire ring-shaped member can be heated substantially evenly and efficiently.

### [Brief Description of Drawings]

FIG. 1 is a cross-sectional view showing an example of a rolling bearing including an outer ring and an inner ring.
FIG. 2 is a view schematically showing an induction heating apparatus.
FIG. 3 is a cross-sectional view showing a situation of induction-heating the outer ring according to a first embodiment.
FIG. 4 is a view schematically showing a disposition example of a ring-shaped member with respect to an induction coil.
FIG. 5 is a graph schematically showing temperature change in the outer ring when the outer ring is induction-heated.
FIG. 6 is a flowchart showing an example of a procedure in which the outer ring is subjected to quenching processing and tempering processing.
FIG. 7 shows a modification example and is a cross-sectional view showing a situation of induction-heating an outer ring.
FIG. 8 shows another modification example and is a cross-sectional view showing a situation of induction-heating an outer ring.
FIG. 9 is a cross-sectional view showing a situation of induction-heating the outer ring according to a second embodiment.
FIG. 10 is a cross-sectional view showing a situation of induction-heating the outer ring according to a third embodiment.
FIG. 11 is a cross-sectional view showing a situation of induction-heating the inner ring according to a fourth embodiment.
FIG. 12 is a cross-sectional view showing a situation of induction-heating the inner ring according to a fifth embodiment.
FIG. 13 is a cross-sectional view showing a situation of induction-heating the inner ring according to a sixth embodiment.
FIG. 14 is a cross-sectional view showing a situation of induction-heating the ring-shaped member according to a seventh embodiment.
FIG. 15 is a cross-sectional view showing a situation of induction-heating the ring-shaped member according to an eighth embodiment.
FIG. 16 is a cross-sectional view showing a situation of induction-heating the ring-shaped member according to a ninth embodiment.
FIG. 17 is a cross-sectional view showing a situation of induction-heating the ring-shaped member having diverse shapes.
FIG. 18 is a view of a schematic constitution of a motor in which a bearing is applied as a ring-shaped member.

### [Description of Embodiments]

### [First embodiment]

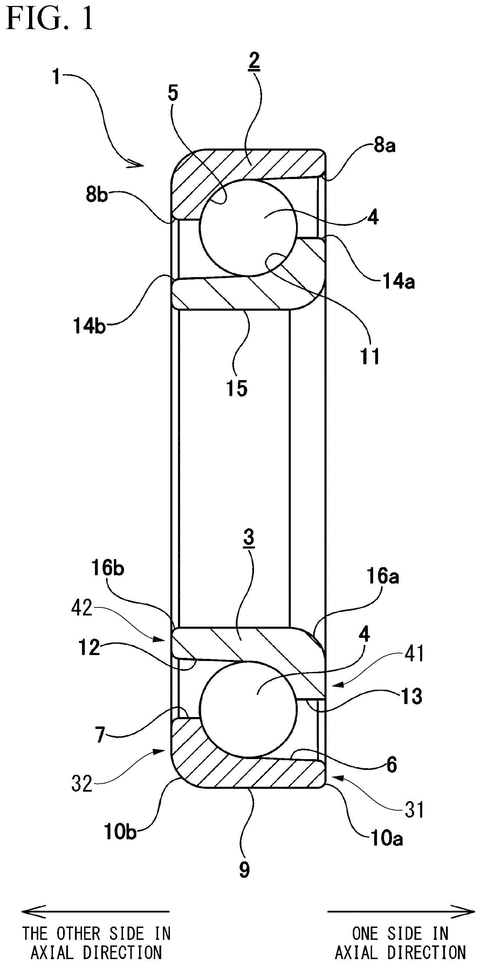

A first embodiment of the present invention will be described using FIGS. 1 to 6. In the present embodiment, for example, as shown in FIG. 1, an outer ring 2 of a radial rolling bearing 1 is heated by an induction heating method and is subjected to quenching processing and tempering processing. In this case, the outer ring 2 corresponds to a ring-shaped member. Hereinafter, first, a structure of the radial rolling bearing 1 will be described. Thereafter, a manufacturing method for the outer ring 2 including the quenching processing and the tempering processing will be described.

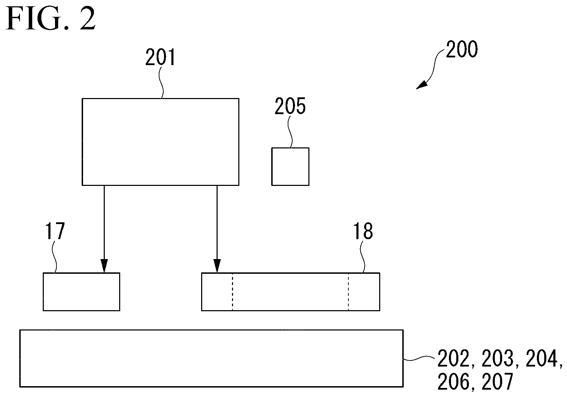

In the following description, unless otherwise noted, an axial direction, a radial direction, and a circumferential direction indicate the axial direction, the radial direction, and the circumferential direction of the radial rolling bearing 1. The axial direction, the radial direction, and the circumferential direction of the radial rolling bearing 1 coincide with the axial direction, the radial direction, and the circumferential direction of the outer ring 2 and coincide with the axial direction, the radial direction, and the circumferential direction of an inner ring 3. Regarding the radial rolling bearing 1, one side in the axial direction (first axial ends 31 and 41) indicates the right side in FIG. 1 and the upward side in FIG. 2, and the other side in the axial direction (second axial ends 32 and 42) indicates the left side in FIG. 1 and the downward side in FIG. 2.

### <Structure of radial rolling bearing 1>

The radial rolling bearing 1 is constituted of a single-row angular contact ball bearing and includes the outer ring 2, the inner ring 3, and a plurality of rolling bodies 4.

In one example, the outer ring 2 is constituted of a hard metal such as a bearing steel or a carburized steel. In another example, the outer ring 2 is constituted of a different material.

The outer ring 2 has an outer ring raceway 5 for the rolling bodies 4 in an intermediate portion on an inner circumferential surface (inner surface) in the axial direction. In one example, the outer ring raceway 5 has an arcuate generatrix shape having a diameter increasing toward one side in the axial direction (the first axial end 31). In addition, the outer ring 2 includes an inclined surface portion 6 having a conically recessed surface shape inclined in a direction in which the inner diameter increases toward the first axial end 31 in a part on the inner circumferential surface adjacent to the first axial end 31 of the outer ring raceway 5. In addition, the outer ring 2 includes a cylindrical surface portion 7 whose inner diameter does not change in the axial direction in a part on the inner circumferential surface adjacent to the other side of the outer ring raceway 5 in the axial direction (the second axial end 32). Moreover, the outer ring 2 includes chamfered portions 8a and 8b having arcuate generatrix shapes in end portions of the inner circumferential surface on both sides in the axial direction.

The outer ring 2 includes a cylindrical surface portion (flat surface) 9 whose outer diameter does not change in the axial direction in an intermediate portion on an outer circumferential surface (outer surface) in the axial direction, and includes chamfered portions 10a and 10b having arcuate generatrix shapes in end portions of the outer circumferential surface on both sides in the axial direction.

That is, the outer ring 2 has a radial thickness (thickness change, a wall configuration) entirely decreasing toward the first axial end 31 (including the chamfered portion 8b on the inner circumferential surface and excluding a part near the second axial end 32 including the chamfered portion 10b on the outer circumferential surface). The outer circumferential surface (outer surface) of the outer ring 2 has a flat surface with relatively small unevenness and has a relatively uniform surface height with respect to a reference axis in the axial direction. The inner circumferential surface (inner surface) of the outer ring 2 has relatively significant unevenness due to the outer ring raceway 5 and the like, and change in surface height with respect to the reference axis in the axial direction is relatively significant.

In one example, the inner ring 3 is constituted of a hard metal such as a bearing steel or a carburized steel. In another example, the inner ring 3 is constituted of a different material. The inner ring 3 can be constituted of the same metal material as that of the outer ring 2 or can also be constituted of a metal material different from that of the outer ring 2.

The inner ring 3 has an inner ring raceway 11 for the rolling bodies 4 in an intermediate portion on the outer circumferential surface (outer surface) in the axial direction. In one example, the inner ring raceway 11 has an arcuate generatrix shape having a diameter increasing toward the other side in the axial direction (the second axial end 42). In addition, the inner ring 3 includes an inclined surface portion 12 having a conically projecting surface shape inclined in a direction in which the outer diameter decreases toward the second axial end 42 in a part on the outer circumferential surface adjacent to the second axial end 42 of the inner ring raceway 11. In addition, the inner ring 3 includes a cylindrical surface portion 13 whose outer diameter does not change in the axial direction in a part on the outer circumferential surface adjacent to one side of the inner ring raceway 11 in the axial direction (the first axial end 41). Moreover, the inner ring 3 includes chamfered portions 14a and 14b having arcuate generatrix shapes in end portions of the outer circumferential surface on both sides in the axial direction.

The inner ring 3 includes a cylindrical surface portion (flat surface) 15 whose inner diameter does not change in the axial direction in an intermediate portion on the inner circumferential surface (inner surface) in the axial direction, and includes chamfered portions 16a and 16b having arcuate generatrix shapes in end portions of the inner circumferential surface on both sides in the axial direction.

That is, the inner ring 3 has a radial thickness (thickness change, a wall structure) entirely decreasing toward the second axial end 42 (including the chamfered portion 14a on the outer circumferential surface and excluding a part near the first axial end 41 having the chamfered portion 16a on the inner circumferential surface). The inner circumferential surface (inner surface) of the inner ring 3 has a flat surface with relatively small unevenness and has a relatively uniform surface height with respect to the reference axis in the axial direction. The outer circumferential surface (outer surface) of the inner ring 3 has relatively significant unevenness due to the inner ring raceway 11 and the like, and change in surface height with respect to the reference axis in the axial direction is relatively significant.

The plurality of rolling bodies 4 are rotatably disposed between the outer ring raceway 5 and the inner ring raceway 11. In one example, each of the rolling bodies 4 is constituted of a ball. In another example, the rolling bodies 4 are constituted of those other than balls, such as rollers. In addition, in one example, each of the rolling bodies 4 is constituted of a hard metal such as a bearing steel or a carburized steel, or a ceramic. In another example, the rolling bodies 4 are constituted of different materials.

### <Manufacturing method for outer ring 2>

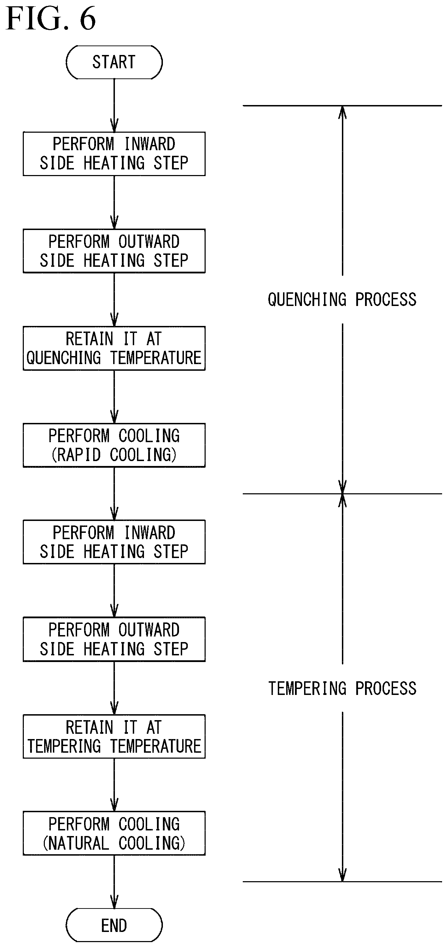

When the outer ring 2 is made, first, a metal material is subjected to forging, and an approximate shape of the outer ring 2 is molded. Thereafter, the inner circumferential surface is subjected to grinding, and the outer ring raceway 5 is formed. Next, as shown in FIG. 6, the outer ring 2 is subjected to the quenching processing and the tempering processing. Both the quenching processing and the tempering processing are performed by heating the outer ring 2 to a target temperature, retaining it thereat for a predetermined time, and then cooling it.

Heating of the outer ring 2 in the quenching processing and the tempering processing are performed by induction-heating the outer ring 2 by generating an eddy current inside the outer ring 2 using an induction heating coil.

As shown in FIG. 2, an induction heating apparatus 200 includes an inside coil (an inside induction coil, a radially inward induction heating coil, an inner coil) 17, an outside coil (a radially outward induction heating coil, an outside induction coil, an outer coil) 18, and a power source device 201 supplying a high-frequency current to the induction coils 17 and 18. Additionally, the induction heating apparatus 200 can include at least one of a support device 202 for supporting a heating target object (a ring-shaped member, a workpiece), a conveyance device 203 for conveying a ring-shaped member, a cooling device 204 for cooling a ring-shaped member, a sensor 205 for detecting the temperature of a ring-shaped member, an electrical matching device 206, and a control unit 207. The induction heating apparatus 200 can independently and individually control supply outputs (current values or the like) to the induction coil 17 and the induction coil 18. In one example, the induction heating apparatus 200 can independently and individually control a timing of supplying a current to the induction coil 17 and a timing of supplying a current to the induction coil 18. In addition, in one example, the induction heating apparatus 200 can independently and individually control current values (output values) with respect to the induction coil 17 and the induction coil 18. In addition, in one example, the induction heating apparatus 200 can independently and individually control output times (heating times) with respect to the induction coil 17 and the induction coil 18. In one example, the induction heating apparatus 200 can independently and individually control a relative positional relationship between the induction coils 17 and 18 and a ring-shaped member. The induction heating apparatus 200 may control a part of the control described above in a non-independent manner.

In the present embodiment, a method for induction-heating the outer ring 2 includes an inward side heating step (a radially inside heating step, an inner surface heating step, a first heating step) and an outward side heating step (a radially outside heating step, an outer surface heating step, a second heating step), which are performed independently from each other. In the present example, a step of induction-heating the outer ring 2 is performed in the order of the inward side heating step (first heating step) and the outward side heating step (second heating step). The induction heating apparatus 200 includes a first mode of induction-heating a ring-shaped member by supplying a current to one coil such that at least a part of the ring-shaped member reaches a first target temperature, and a second mode of induction-heating a ring-shaped member by supplying a current to the other coil such that at least a part of the ring-shaped member reaches a second target temperature higher than the first target temperature.

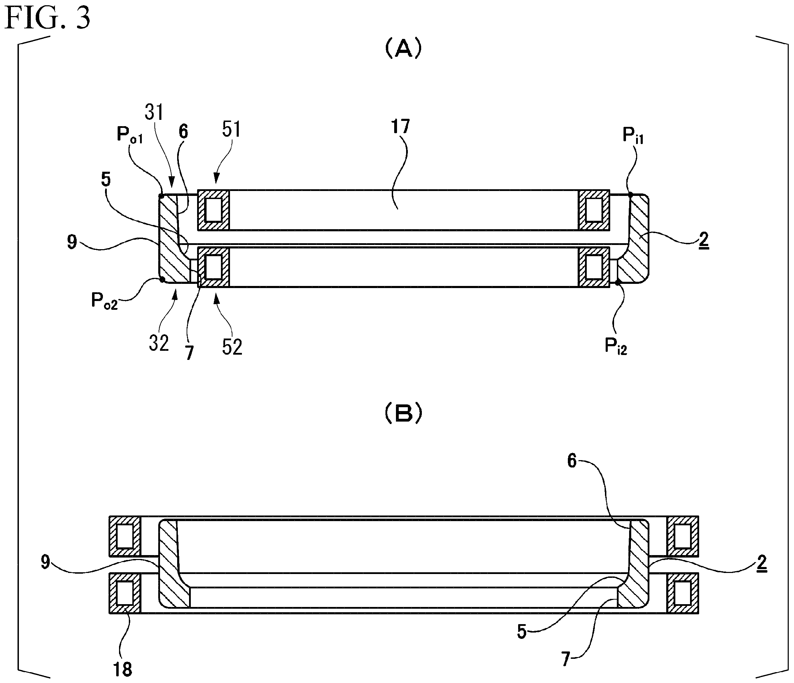

In the inward side heating step, as shown in FIG. 3(A), the inside coil (the radially inward induction heating coil, the inner coil) 17 is disposed at the radially inward position of the outer ring 2, and the outer ring 2 is induction-heated from the radially inward side by electrifying the induction coil 17 in a state in which an induction coil (an induction heating coil, a substantial coil) is not disposed at the radially outward position of the outer ring 2. In a state in which no substantial coil is disposed at the radially outward position of the outer ring 2, the outer ring 2 is induction-heated using the induction coil (inner coil) 17 disposed at the radially inward position of the outer ring 2. That is, an eddy current is generated in a part of the outer ring 2 on the radially inward side by electrifying the inside coil 17 disposed at the radially inward position of the outer ring 2, and the outer ring 2 is heated from the radially inward side.

In one example, the inside coil 17 has a conducting wire which is spirally wound with a uniform inner diameter in the axial direction or has a conductive material which is bending-molded into an annular shape with a uniform inner diameter in the axial direction. In another example, the inside coil 17 can have a constitution other than those described above.

In the present embodiment, the inside coil 17 used in the inward side heating step is disposed adjacent to the inner surface of the outer ring 2 such that the outer surface of the induction coil 17 faces the inner surface of the outer ring 2. In one example, the outer circumferential surface (outer surface) of the inside coil 17 and the cylindrical surface portion 7 provided on the inner circumferential surface (inner surface) of the outer ring 2 closely face each other. The distance between the outer circumferential surface of the inside coil 17 and the cylindrical surface portion 7 provided on the inner circumferential surface of the outer ring 2 is set such that an eddy current can be generated in a part of the outer ring 2 on the radially inward side. For example, it can be approximately 1% to 30% of the inner diameter of the cylindrical surface portion 7 of the outer ring 2. The foregoing numerical values are merely examples, and it is not limited to the foregoing numerical values.

The outer ring 2 is heated for a predetermined time in the radially inside heating step and then is conveyed for the radially outside heating step.

In the outward side heating step, as shown in FIG. 3(B), the outside coil (the radially outward induction heating coil, the outer coil) 18 is disposed at the radially outward position of the outer ring 2, and the outer ring 2 is induction-heated from the radially outward side by electrifying the outside coil 18 in a state in which an induction coil (an induction heating coil, a substantial coil) is not disposed at the radially inward position of the outer ring 2. In a state in which no substantial coil is disposed at the radially inward position of the outer ring 2, the outer ring 2 is induction-heated using the induction coil (inner coil) 18 disposed at the radially outward position of the outer ring 2. That is, an eddy current is generated in a part of the outer ring 2 on the radially outward side by electrifying the outside coil 18 disposed at the radially outward position of the outer ring 2, and the outer ring 2 is heated from the radially outward side.

In one example, the outside coil 18 has a conducting wire which is spirally wound with a uniform outer diameter in the axial direction or has a conductive material which is bending-molded into an annular shape with a uniform outer diameter in the axial direction. In another example, the outside coil 18 can have a constitution other than those described above.

In the present embodiment, the outside coil 18 used in the outward side heating step is disposed adjacent to the outer surface of the outer ring 2 such that the inner surface of the induction coil 18 faces the outer surface of the outer ring 2. In one example, the inner circumferential surface (inner surface) of the outside coil 18 and the outer circumferential surface (outer surface) of the outer ring 2 closely face each other. The distance between the inner circumferential surface of the outside coil 18 and the outer circumferential surface of the outer ring 2 is set such that an eddy current can be generated in a part of the outer ring 2 on the radially outward side. For example, it can be approximately 1% to 30% of the outer diameter of the outer ring 2. The foregoing numerical values are merely examples, and it is not limited to the foregoing numerical values.

For example, in the quenching processing of the outer ring 2, the inner surface heating step and the outer surface heating step are performed with respect to the outer ring 2 in this order, and the outer ring 2 is heated to a quenching temperature within a range of 800°C to 1,000°C. Further, the outer ring 2 is left unattended inside the induction heating apparatus, is retained at the quenching temperature for one second to 30 seconds, and is then rapidly cooled to room temperature by performing oil cooling or the like in which the outer ring 2 is immersed in a quenching oil. The foregoing numerical values and procedures are merely examples, and the processing is not limited to the foregoing numerical values and procedures.

For example, in the tempering processing of the outer ring 2, the inward side heating step and the outward side heating step are performed with respect to the outer ring 2 in this order, and the outer ring 2 is heated to a tempering temperature within a range of 150°C to 300°C. Further, the outer ring 2 is left unattended inside the induction heating apparatus, is retained at the tempering temperature for one second to 30 seconds, and is then naturally cooled to room temperature. The foregoing numerical values and procedures are merely examples, and the processing is not limited to the foregoing numerical values and procedures.

After the outer ring 2 is subjected to the quenching processing and the tempering processing, as necessary, the outer ring raceway 5 is subjected to finishing such as grinding, and the outer ring 2 is completed.

Here, in the present embodiment, effective lengths of the induction coils 17 and 18 (a range of lengths of the coils in the axial direction contributing to induction heating (a distance from a first effective heating end 51 to a second effective heating end 52 in the axial direction)) are set to be larger than an axial length (a distance from the first axial end 31 to the second axial end 32 in the axial direction) of a ring-shaped member (a workpiece, the outer ring 2, or the like). For example, the effective lengths of the induction coils 17 and 18 are set to 110%, 120%, 130%, 140%, 150%, 160%, 170%, 180%, 190%, 200%, 210%, 220%, 230%, 240%, 250%, 260%, 270%, 280%, 290%, or 300% or more of the axial length of the outer ring 2. Since the effective lengths of the induction coils 17 and 18 are 110% or more of the axial length of a ring-shaped member, a part of a magnetic field infiltrates into a axial end surface of the outer ring 2 and the like so that a heating region in the ring-shaped member expands and heating can be evenly performed over the entire ring-shaped member. For example, in addition to the inner surface or the outer surface of a ring-shaped member, heating proceeds toward the inside from the axial end surface. Since the effective lengths of the induction coils 17 and 18 are 200% or more of the axial length of a ring-shaped member, a tolerance level for shape change and positional unevenness of the ring-shaped member is relaxed so that versatility of the induction coils 17 and 18 is enhanced. For example, the effective lengths of the induction coils 17 and 18 are set to be 200% or more of the average axial length of a ring-shaped member in a predetermined lot (a lot including a plurality of kinds of ring-shaped members (outer rings or the like) having different shapes). In this case, a plurality of ring-shaped members having diverse shapes are heat-treated using one kind of the induction coils 17 and 18. Reduction in replacement frequency and common heating conditions of the induction coils 17 and 18 are advantageous to improvement in productivity.

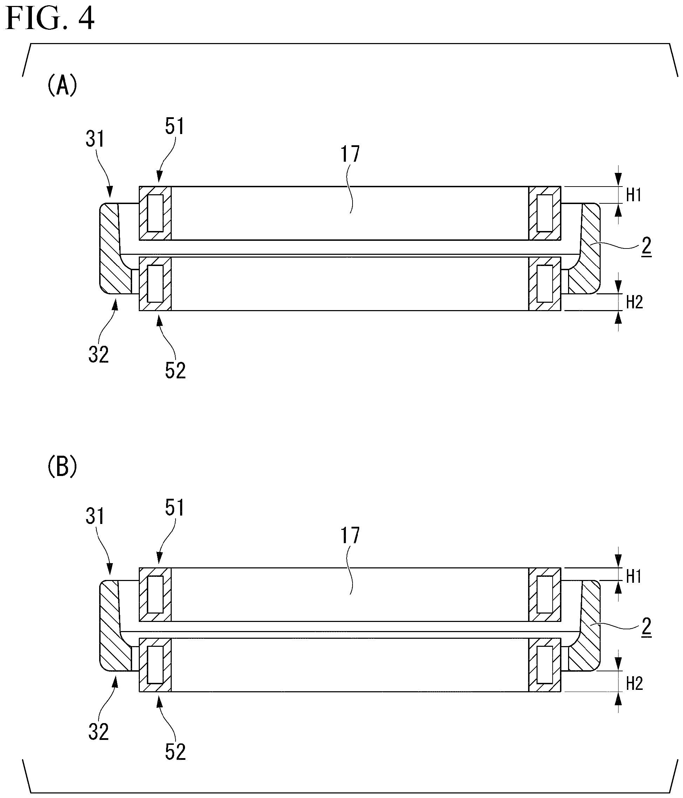

In one example, as shown in FIG. 4(A), the positional relationship between the induction coil and a ring-shaped member is set such that a center position of the ring-shaped member (the outer ring 2 or the like) in the axial direction becomes the same position as a center position of the effective length of the induction coil (the induction coil 17 or the like) in the axial direction. In this case, an extension length (protrusion height) H1 of the induction coil (the induction coil 17 or the like) near the first axial end (the first axial end 31 of the outer ring 2 or the like) of the ring-shaped member is the same as an extension length (protrusion height) H2 of the induction coil near the second axial end (the second axial end 32 of the outer ring 2 or the like). That is, the distance H1 between the first axial end (the first axial end 31 of the outer ring 2 or the like) of the ring-shaped member in the axial direction and the first axial end (the first axial end 51 of the induction coil 17 or the like) of the induction coil is the same as the distance H2 between the second axial end (the second axial end 32 of the outer ring 2 or the like) of the ring-shaped member in the axial direction and the second axial end (the second axial end 52 of the induction coil 17 or the like) of the induction coil. In another example, as shown in FIG. 4(B), the distance H2 is set to be larger than the distance H1. That is, the positional relationship between the induction coil and the ring-shaped member is set such that the center position of the ring-shaped member (the outer ring 2 or the like) in the axial direction becomes a position different from the center position of the effective length of the induction coil (the induction coil 17 or the like) in the axial direction. In the example of FIG. 4(B), the thickness of a part near the second axial end (the second axial end 32 of the outer ring 2 or the like) is larger than the thickness of the ring-shaped member in a part near the first axial end (the first axial end 31 of the outer ring 2 or the like) of the ring-shaped member. Since the extension length (protrusion height) H2 of the induction coil near the second axial end having a larger thickness is set to be relatively larger, heating can be evenly performed over the entire ring-shaped member having thickness change. These may also be similarly applied when the induction coil is disposed at the radially outward position of the ring-shaped member. Since the effective lengths of the induction coils 17 and 18 are larger than the axial length of the ring-shaped member, the tolerance level for change in relative positional relationship between the induction coil and the ring-shaped member is relaxed.

Returning to FIG. 3, in the present embodiment, when the outer ring 2 is induction-heated so as to perform the quenching processing or the tempering processing, the inward side heating step and the outward side heating step are performed independently from each other. In a state in which no substantial coil is disposed at the radially outward position of the outer ring 2, the outer ring 2 is heated from the inward side. In a state in which no substantial coil is disposed at the radially inward position of the outer ring 2, the outer ring 2 is heated from the outward side. Therefore, the heating conditions in the inward side heating step of induction-heating the outer ring 2 from the radially inward side and the heating conditions in the outward side heating step of induction-heating the outer ring 2 from the radially outward side can be independently controlled. For this reason, it is easy to control the heating state of the outer ring 2. That is, the entire outer ring 2 can be heated substantially evenly and efficiently by suitably setting each of the heating conditions in the inward side heating step and the heating conditions in the outward side heating step. In virtue of a combination of disposition of a single induction coil with respect to the ring-shaped member (the outer ring 2 or the like) and setting of the length of the induction coil, advantages of both improvement in heating efficiency and improvement in productivity can be achieved. Such advantages may be achieved with respect to each of a plurality of heating steps and a single heating step.

The heating conditions include values of currents supplied to the induction coils 17 and 18 (∝ outputs of the induction heating coils 17 and 18), a heating time, a positional relationship between the outer ring 2 and the induction coils 17 and 18, and the like.

In the present embodiment, the induction heating method includes a step of preparing the inside coil 17 disposed at the radially inward position of the outer ring 2 and the outside coil 18 disposed at the radially outward position of the outer ring 2, a first heating step of induction-heating the outer ring 2 by supplying a current to one coil among the inside coil 17 and the outside coil 18 such that at least a part of the outer ring 2 reaches the first target temperature, and a second heating step of induction-heating the outer ring 2 by supplying a current to another coil among the inside coil 17 and the outside coil 18 after the first heating step such that at least a part of the outer ring 2 reaches the second target temperature higher than the first target temperature. In the present embodiment, the one coil (the inside coil 17) used in the first heating step is disposed adjacent to the inner surface (first surface) among the inner surface and the outer surface of the outer ring 2, where the inner surface height relatively changes, and the another coil (the outside coil 18) used in the second heating step is disposed adjacent to the outer surface (second surface) among the inner surface and the outer surface of the outer ring 2, where the outer surface has a relatively uniform surface height. In a state in which only one of the inside coil 17 and the outside coil 18 is disposed adjacent to the outer ring 2, at least one of the first heating step and the second heating step is executed. In the present embodiment, the inward side heating step and the outward side heating step are performed in this order.

Here, generally, when an outer ring or an inner ring of a bearing is heated by induction heating, there is a probability of occurrence of the following problems. For example, an outer ring of a rolling bearing has an outer ring raceway on the inner circumferential surface. If an induction coil is disposed at the radially inward position of the outer ring, the distance between the inner circumferential surface of the outer ring and the induction coil varies depending on the position in the axial direction. For this reason, when the induction coil is electrified, eddy currents concentrate on a part on the inner circumferential surface at a distance closer to the induction coil so that the part is likely to be intensively induction-heated. Parts at distances farther from the induction coil are heated due to heat transferred from the part on the inner circumferential surface at a distance closer to the induction coil. When the difference in temperature increase rate is significant according to the position of the outer ring in the axial direction, it is difficult to evenly heat the entire outer ring. If the quenching processing and the tempering processing are performed while the temperature inside the outer ring is not uniform, the thickness of a hardened layer formed on the surface of the outer ring will not be uniform or the like, and there is a probability that the required quality will not be satisfied. In order to avoid such problems, it is conceivable to adopt a method in which the output of the induction coil is reduced by reducing the value of a current supplied to the induction coil so as to lengthen the heating time of the outer ring. In this method, the difference in temperature increase rate of the outer ring according to the position in the axial direction can be kept down, but it causes decrease in productivity, which is not preferable.

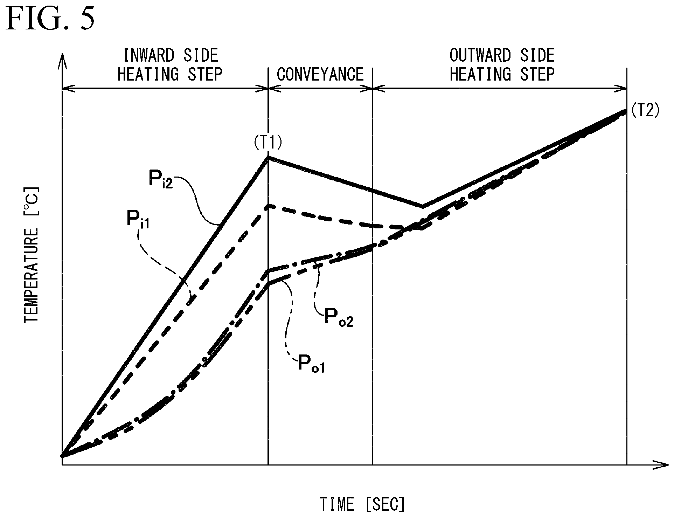

In the present embodiment, in the first heating step (inward side heating step), the outer ring 2 is heated by the induction coil 17 disposed in a manner of facing the inner surface of the outer ring 2 where the surface height relatively changes. Thereafter, in the second heating step (outward side heating step), the outer ring 2 is heated by the induction coil 18 disposed in a manner of facing the outer surface of the outer ring 2 having a relatively uniform surface height. For example, as shown in FIG. 5, in the first heating step (inward side heating step), the temperature of a part (Pᵢ₂) of the outer ring 2 on the inner surface side rises relatively quickly and reaches a first target temperature T1. At this time, temperatures of other parts are lower than the first target temperature. The heat of the part (Pᵢ₂) of the outer ring 2 having a relatively high temperature is transferred to other parts. In the second heating step (outward side heating step), the outer ring 2 is heated from the outward side, and a great part of the outer ring 2 reaches a temperature close to a second target temperature T2 at a certain timing. In induction heating of the outer ring 2 having relatively significant thickness change, the entire outer ring 2 is heated in a relatively short period of time and the difference in temperature increase rate of the outer ring 2 is kept down.

In the inward side heating step (first heating step), when the output of the inside coil 17 is increased by increasing the value of a current supplied to the inside coil 17, as schematically shown in FIG. 5, the temperature on the inner circumferential surface (Pᵢ₂ (refer to FIG. 3(A)) in the end portion of the second axial end having a large radial thickness in the outer ring 2 can be quickly raised to a temperature near the first target temperature.

In the inward side heating step, on the inner circumferential surface of the outer ring 2, the amount of temperature rise in the end portion Pᵢ₂ of the second axial end at a distance closer to the inside coil 17 becomes larger than the amount of temperature rise in an end portion Pᵢ₁ of the first axial end at a distance farther from the inside coil 17. Meanwhile, the amount of temperature rise in an end portion P_{O2} of the second axial end on the outer circumferential surface of the outer ring 2 and the amount of temperature rise in an end portion P_{O1} of the first axial end on the outer circumferential surface of the outer ring 2 are approximately the same.

In the outward side heating step, the outer ring 2 is heated from a flat surface having a relatively uniform surface height (a part on the radially outward side having a uniform outer diameter excluding the end portions on both sides in the axial direction). The output is adjusted by adjusting the value of a current supplied to the outside coil 18, and the heating time is adjusted. Accordingly, as schematically shown in FIG. 5, the entire outer ring 2 is substantially evenly heated so as to be close to the target temperature (second target temperature). In other words, the temperatures of the parts in the outer ring 2 rise to the target temperature almost at the same timing.

The step of induction-heating the outer ring 2 can also be performed in the order of the outward side heating step and the inward side heating step, as will be described below.

The heating conditions in the inward side heating step and the heating conditions in the outward side heating step can be determined in advance through an experiment, a simulation, or the like. Although it depends on the radial thickness of the outer ring 2 or the like, the heating time in the outward side heating step can be 50% to 200%, for example, and is preferably 80% to 120% of the heating time in the inward side heating step. Although it depends on the radial thickness of the outer ring 2 or the like, the value of a current supplied to the outside coil 18 in the outward side heating step can be 50% to 200%, for example, and is preferably 80% to 120% of the value of a current supplied to the inside coil 17 in the inward side heating step.

In one example, in the inward side heating step, the outer circumferential surface of the inside coil 17 and the cylindrical surface portion 7 provided on the inner circumferential surface of the outer ring 2 closely face each other, and in the outward side heating step, the inner circumferential surface of the outside coil 18 and the outer circumferential surface of the outer ring 2 closely face each other. In addition, a combination corresponding to the outer ring 2 having a particular model number is used as the inside coil 17 and the outside coil 18. In this case, in the inward side heating step, heating of the outer ring 2 from the radially inward side is efficiently executed, and in the outward side heating step, heating of the outer ring 2 from the radially outward side is efficiently executed. Therefore, the time required for the outer ring 2 to be heated to the target temperature is kept short. In the present example, during mass production of the outer rings 2 having the same model number, the production efficiency is favorably secured.

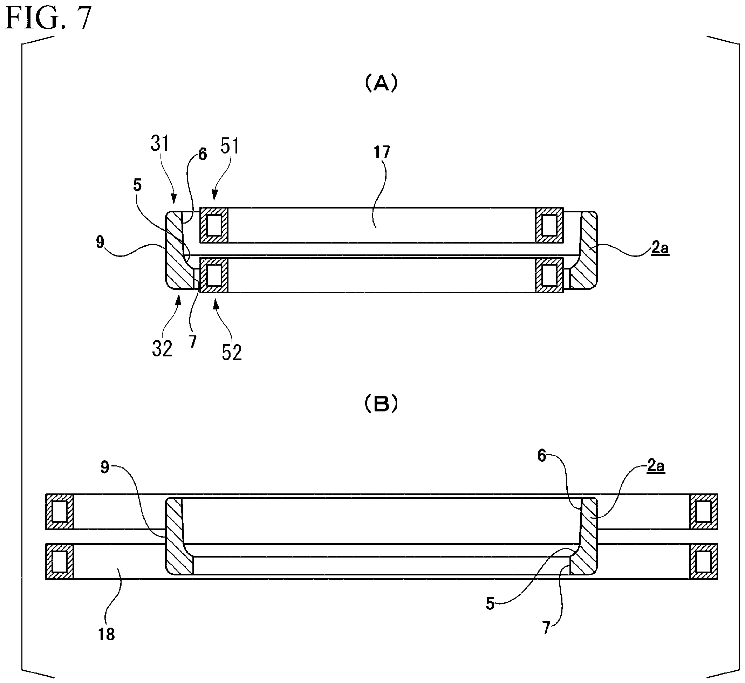

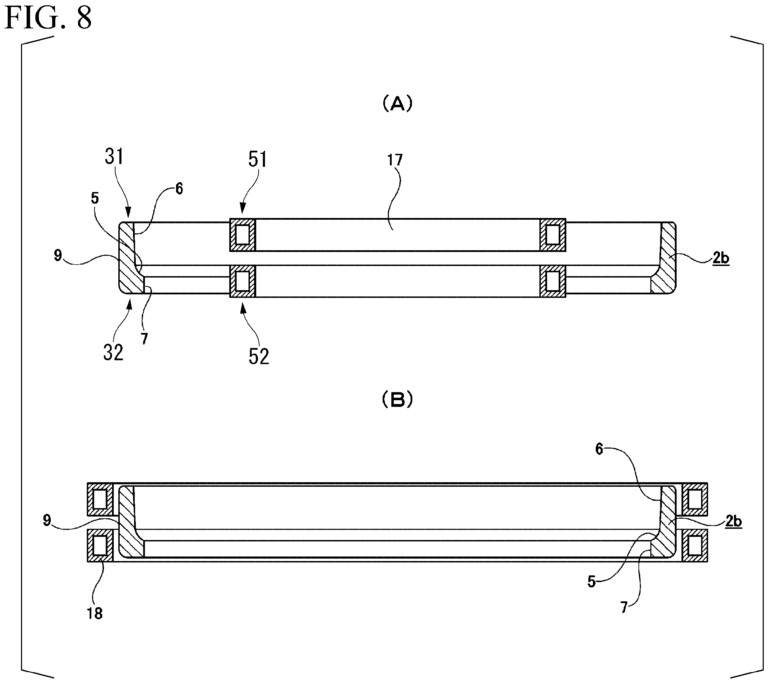

In another example, a relatively large gap in the radial direction is provided in a part between the outer circumferential surface of the inside coil 17 and the cylindrical surface portion 7 provided on the inner circumferential surface of the outer ring 2 in the inward side heating step and/or in a part between the inner circumferential surface of the outside coil 18 and the cylindrical surface portion 9 provided in the outer circumferential surface of the outer ring 2 in the outward side heating step. For example, as shown in FIG. 8(A), regarding the radially inward induction coil 17, an induction coil having a smaller ratio of the outer diameter to the inner diameter of the cylindrical surface portion 7 than the radially inward induction coil 17 in the first example shown in FIG. 3(A) is used. A gap in the radial direction larger than the gap in the form shown in FIG. 3(A) is present in a part between the outer circumferential surface of the inside coil 17 and the cylindrical surface portion 7. In addition, as shown in FIG. 7(B), regarding the radially outward induction coil 18, an induction coil having a larger ratio of the inner diameter to the outer diameter of the cylindrical surface portion 9 than the radially outward induction coil 18 in the first example shown in FIG. 3(B) is used. A gap in the radial direction larger than the gap in the form shown in FIG. 3(B) is present in a part between the inner circumferential surface of the outside coil 18 and the cylindrical surface portion 9.

In this case, using the same combination of the inside coil 17 and the outside coil 18, a plurality of kinds of outer rings having different outer diameters and inner diameters can be induction-heated. For example, in the inward side heating step shown in FIG. 7(A), the outer circumferential surface of the inside coil 17 and the cylindrical surface portion 7 provided on the inner circumferential surface of an outer ring 2a closely face each other. In the outward side heating step shown in FIG. 7(B), a relatively large gap in the radial direction is present in a part between the inner circumferential surface of the outside coil 18 and the outer circumferential surface of the outer ring 2a. The distance between the inner circumferential surface of the outside coil 18 and the outer circumferential surface of the outer ring 2a is not particularly limited as along as an eddy current can be generated in a part of the outer ring 2a on the radially outward side on the basis of electrification of the outside coil 18. However, for example, it can be approximately 1% to 30% of the outer diameter of the outer ring 2a at most.

In the example of FIG. 7, a relatively large gap in the radial direction is present in a part between the inner circumferential surface of the outside coil 18 and the outer circumferential surface of the outer ring 2a in the outward side heating step. However, in the outward side heating step, the output of the outside coil 18 is increased by increasing the value of a current supplied to the outside coil 18, and therefore the time required for the outer ring 2a to be heated to the target temperature can be prevented from excessively increasing.

In the example shown in FIG. 8, using the inside coil 17 and the outside coil 18 in the same combination as that of the form in FIG. 7, an outer ring 2b whose outer diameter and inner diameter are larger than those in the example of FIG. 7 induction-heated. In the inward side heating step shown in FIG. 8(A), a relatively large gap in the radial direction is present in a part between the outer circumferential surface of the inside coil 17 and the cylindrical surface portion 7 provided on the inner circumferential surface of the outer ring 2b. In the outward side heating step shown in FIG. 8(B), the inner circumferential surface of the outside coil 18 and the outer circumferential surface of the outer ring 2a closely face each other. The distance between the outer circumferential surface of the inside coil 17 and the inner circumferential surface of the outer ring 2b is not particularly limited as along as an eddy current can be generated in a part of the outer ring 2b on the radially inward side. However, for example, it can be approximately 1% to 30% of the inner diameter of the outer ring 2b at most.

In the example of FIG. 8, a relatively large gap in the radial direction is present in a part between the outer circumferential surface of the inside coil 17 and the inner circumferential surface of the outer ring 2b in the inward side heating step. In the inward side heating step, the output of the inside coil 17 is increased by increasing the value of a current supplied to the inside coil 17, and therefore the time required for the outer ring 2b to be heated to the target temperature can be prevented from excessively increasing.

In the example of FIGS. 7 and 8, the entire outer rings 2a and 2b can be heated substantially evenly and efficiently by suitably setting each of the heating conditions in the outward side heating step and the heating conditions in the inward side heating step.

In the example of FIGS. 7 and 8, the heating conditions are set so as to allow a relatively large gap in the radial direction to be present in a part between the outer circumferential surface of the inside coil 17 and the cylindrical surface portion 7 provided on the inner circumferential surface of the outer ring 2 in the inward side heating step and/or in a part between the inner circumferential surface of the outside coil 18 and the outer circumferential surface of the outer ring 2 in the outward side heating step. Using the same combination of the inside coil 17 and the outside coil 18, a plurality of kinds of outer rings having different outer diameters and inner diameters can be induction-heated. There is no need to replace the inside coil 17 and the outside coil 18 every time the outer diameter and the inner diameter of the outer ring are changed. For example, it is particularly preferably applied to a manufacturing line targeted at outer rings in a multi-product small lot. Since there is no need to prepare a plurality of combinations of the inside coil 17 and the outside coil 18, work of replacing the inside coil 17 and the outside coil 18 is omitted, and thus the production efficiency is improved.

In the inward side heating step, the induction heating coil is not disposed at the radially outward position of the outer ring 2, and in the outward side heating step, the induction heating coil is not disposed at the radially inward position of the outer ring 2. For this reason, the heating conditions in the inward side heating step and the heating conditions in the outward side heating step can be stably controlled.

For example, in the inward side heating step, when the induction heating coil which does not supply a current is disposed at the radially outward position of the outer ring 2, there is a probability that a current will also flow in the induction heating coil disposed at the radially outward position of the outer ring 2 due to electromagnetic induction in response to electrification of the inside coil 17. If a part of the outer ring 2 on the radially outward side is heated inadvertently, it is difficult to stably control the heating conditions. In the present embodiment, in the inward side heating step, since the induction heating coil is not disposed at the radially outward position of the outer ring 2, the heating conditions in the inward side heating step can be stably controlled.

In the present embodiment, a case in which the outer ring 2 (ring-shaped member) of the radial rolling bearing 1 (single-row angular contact ball bearing) is heated by the induction heating method and is subjected to the quenching processing and the tempering processing has been described.

However, a ring-shaped member is not limited to an outer ring of a single-row angular contact ball bearing. Regarding a ring-shaped member, an arbitrary ring-shaped member can become a target. For example, a single-row deep groove-type ball bearing, a roller bearing, an outer ring of a conical roller bearing, or an inner ring of a rolling bearing shown in fourth to sixth embodiments (which will be described below) and the like can be applied as a ring-shaped member. Alternatively, an outer ring or an inner ring of a double-row rolling bearing can also be applied as a ring-shaped member. In addition, a sliding bearing can also be applied as a ring-shaped member.

Heat treating using the induction heating method is not limited to the quenching processing and the tempering processing. It can also be applied to annealing processing or normalizing processing as heat treatment.

In addition, regarding heat treatment using the induction heating method, a ring-shaped member constituting a vehicle or a mechanical device can become a target of quenching, tempering, annealing, normalizing, and/or the like.

### [Second embodiment]

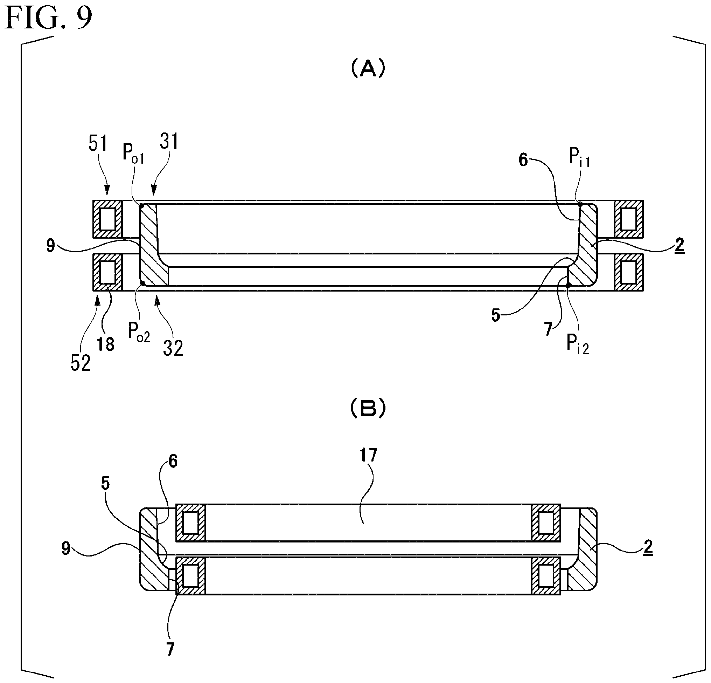

A second embodiment of the present invention will be described with reference to FIG. 9. In the present embodiment, the step of induction-heating the outer ring 2 is performed in the order of the outward side heating step shown in FIG. 9(A) and the inward side heating step shown in FIG. 9(B).

In the present embodiment, similar to the first embodiment, the entire outer ring 2 can be heated substantially evenly and efficiently by suitably setting each of the heating conditions in the outward side heating step and the heating conditions in the inward side heating step.

In the present embodiment, in the first heating step (outward side heating step), the outer ring 2 is heated by the induction coil 18 disposed in a manner of facing the outer surface of the outer ring 2 having a relatively uniform surface height. Thereafter, in the second heating step (inward side heating step), the outer ring 2 is heated by the induction coil 17 disposed in a manner of facing the inner surface of the outer ring 2 where the surface height relatively changes. For example, in the first heating step (outward side heating step) shown in FIG. 9(A), the temperature of a part of the outer ring 2 on the outer surface side reaches the first target temperature. Meanwhile, heat is unlikely to be transferred to the part (Pᵢ₂) of the outer ring 2 on the inner surface side positioned away from the outer surface, and the temperature is lower than in other parts.

Next, shown in FIG. 9(B) in the second heating step (inward side heating step), the part (Pᵢ₂) having a relatively low temperature is likely to be heated, and the temperature of the part (Pᵢ₂) rises relatively quickly. As a result, a great part of the outer ring 2 reaches a temperature close to the second target temperature T2 at a certain timing. In induction heating of the outer ring 2 having relatively significant thickness change, the entire outer ring 2 is heated in a relatively short period of time and the difference in temperature increase rate of the outer ring 2 is kept down. Constitutions and operational effects of other parts are similar to those of the first embodiment.

### [Third embodiment]

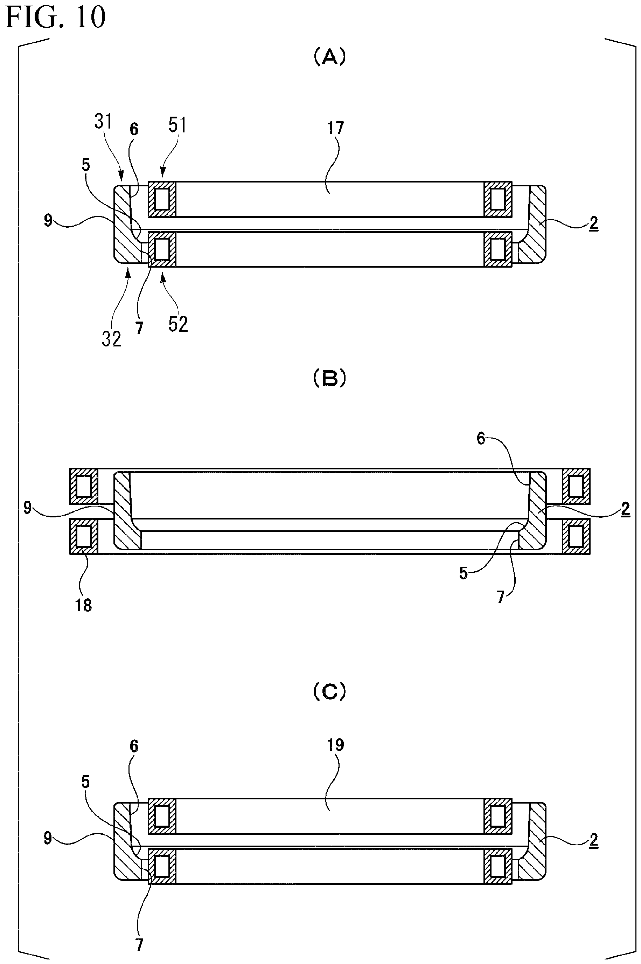

A third embodiment of the present invention will be described with reference to FIG. 10. In the present embodiment, the step of induction-heating the outer ring 2 is performed in the order of the inward side heating step shown in FIG. 10(A) and the outward side heating step shown in FIG. 10(B) and further includes a reheating step of induction-heating the outer ring 2 from the radially inward side as shown in FIG. 10(C), which is performed thereafter.

In the reheating step, a reheating inside coil (a reheating radially inward induction heating coil, a reheating inside induction coil, a reheating inner coil) 19 is disposed at the radially inward position of the outer ring 2, and in a state in which the induction heating coil is not disposed at the radially outward position of the outer ring 2, the outer ring 2 is induction-heated from the radially inward side by electrifying the inside coil 19. In the present embodiment, the outer circumferential surface of the inside coil 19 and the cylindrical surface portion 7 provided on the inner circumferential surface of the outer ring 2 closely face each other.

The positional relationship between the outer ring 2 and the inside coil 19 in the radial direction in the reheating step can be the same as or can differ from the positional relationship between the outer ring 2 and the inside coil 17 in the radial direction in the inward side heating step. In addition, the inside coil 17 used in the inward side heating step can also be used as the inside coil 19.

In the present embodiment, the entire outer ring 2 can be heated substantially evenly and efficiently by suitably setting each of the heating conditions in the inward side heating step, the heating conditions in the outward side heating step, and the heating conditions in the reheating step.

In the present embodiment, since the step of induction-heating the outer ring 2 is performed in the order of the inward side heating step and the outward side heating step and further includes a reheating step of induction-heating the outer ring 2 from the radially inward side, which is performed thereafter, the entire outer ring 2 can be substantially evenly heated more reliably.

That is, in the induction heating method of the first embodiment, in the inward side heating step, while being conveyed for the outward side heating step after the outer ring 2 is heated from the radially inward side, there is a probability that the temperature of a part of the outer ring 2 on the radially inward side will drop. In this case, in the outward side heating step, even if the outer ring 2 is heated from the radially outward side, there is a probability that the temperature of a part of the outer ring 2 on the radially inward side will not rise to the target temperature.

In the present embodiment, after the inward side heating step and the outward side heating step are performed in this order, the reheating step of induction-heating the outer ring 2 from the radially inward side is performed. Even when the temperature of a part of the outer ring 2 on the radially inward side has dropped during conveyance between steps, the temperature can be raised to the target temperature by reheating the part, and the temperature of the entire outer ring 2 can be substantially evenly adjusted. Constitutions and operational effects of other parts are similar to those of the first embodiment.

### [Fourth embodiment]

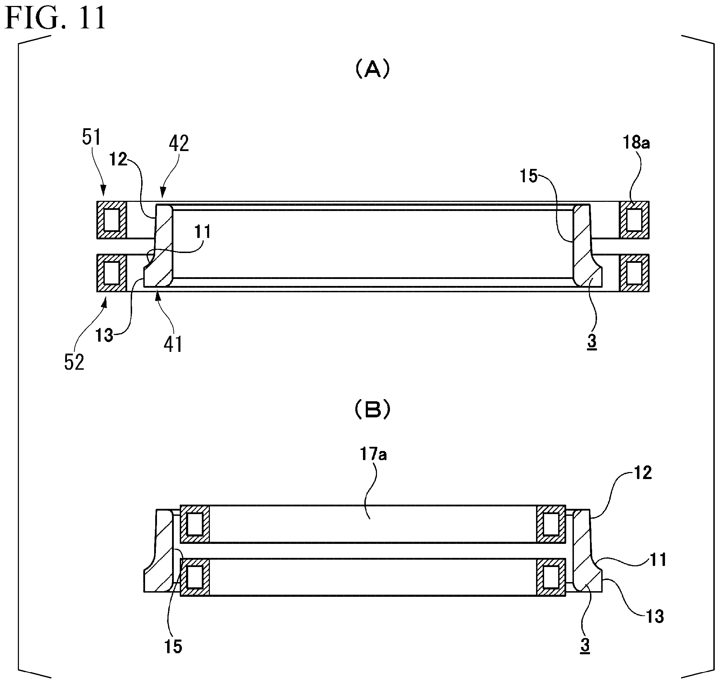

The fourth embodiment of the present invention will be described with reference to FIG. 11. In the present embodiment, the inner ring 3 of the radial rolling bearing 1 shown in FIG. 1 is heated using induction heating.

In the present embodiment, the step of induction-heating the inner ring 3 includes the inward side heating step and the outward side heating step, which are performed independently from each other. In the present embodiment, the step of induction-heating the inner ring 3 is performed in the order of the outward side heating step and the inward side heating step.

In the outward side heating step, as shown in FIG. 11(A), in a state in which an outside coil 18a is disposed at the radially outward position of the inner ring 3 and the induction heating coil is not disposed at the radially inward position of the inner ring 3, the inner ring 3 is induction-heated from the radially outward side by electrifying the outside coil 18a.

In the present embodiment, the inner circumferential surface of the outside coil 18a and the cylindrical surface portion 13 provided on the outer circumferential surface of the inner ring 3 closely face each other. The distance between the inner circumferential surface of the outside coil 18a and the cylindrical surface portion 13 provided on the outer circumferential surface of the inner ring 3 is not particularly limited as along as an eddy current can be generated in a part of the inner ring 3 on the radially outward side. However, for example, it can be approximately 1% to 30% of the outer diameter of the cylindrical surface portion 13 of the inner ring 3.

In the inward side heating step, as shown in FIG. 11(B), in a state in which an inside coil 17a is disposed at the radially inward position of the inner ring 3 and the induction coil is not disposed at the radially outward position of the inner ring 3, the inner ring 3 is induction-heated from the radially inward side by electrifying the inside coil 17a.

In the present embodiment, the outer circumferential surface of the inside coil 17a and the inner circumferential surface of the inner ring 3 closely face each other. The distance between the outer circumferential surface of the inside coil 17a and the inner circumferential surface of the inner ring 3 is not particularly limited as along as an eddy current can be generated in a part of the inner ring 3 on the radially inward side. However, for example, it can be approximately 1% to 30% of the inner diameter of the inner ring 3.

In the present embodiment, the entire outer ring 2 can be heated substantially evenly and efficiently by suitably setting each of the heating conditions in the outward side heating step and the heating conditions in the inward side heating step.

In the present embodiment, the outward side heating step and the inward side heating step are performed in this order.

In the outward side heating step, the temperature on the outer circumferential surface in the end portion of the first axial end having a large radial thickness in the inner ring 3 can be quickly raised to a temperature near the target temperature by increasing the output of the outside coil 18a.

Next, in the inward side heating step, the output is adjusted by adjusting the value of a current supplied to the inside coil 17a and the heating time is adjusted so as to heat the inner ring 3 from a part on the radially inward side having a uniform outer diameter excluding the end portions on both sides in the axial direction. Accordingly, the entire inner ring 3 can be substantially evenly heated to the target temperature. In other words, the temperatures of the parts in the inner ring 3 can be raised to the target temperature almost at the same timing. Constitutions and operational effects of other parts are similar to those of the first embodiment.

### [Fifth embodiment]

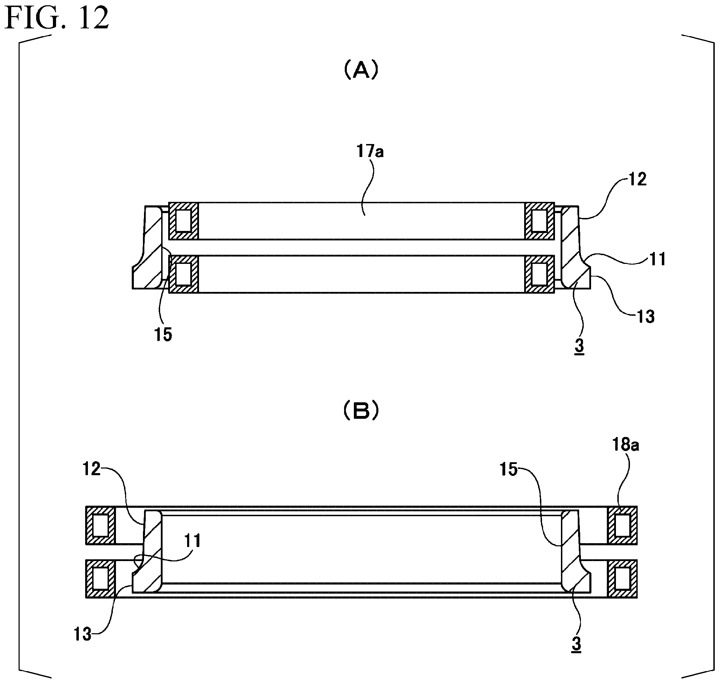

The fifth embodiment of the present invention will be described with reference to FIG. 12. In the present embodiment, the step of induction-heating the inner ring 3 is performed in the order of the inward side heating step shown in FIG. 12(A) and the outward side heating step shown in FIG. 12(B).

In the present embodiment as well, the entire inner ring 3 can be heated substantially evenly and efficiently by suitably setting each of the heating conditions in the inward side heating step and the heating conditions in the outward side heating step. Constitutions and operational effects of other parts are similar to those of the first embodiment and the fourth embodiment.

### [Sixth embodiment]

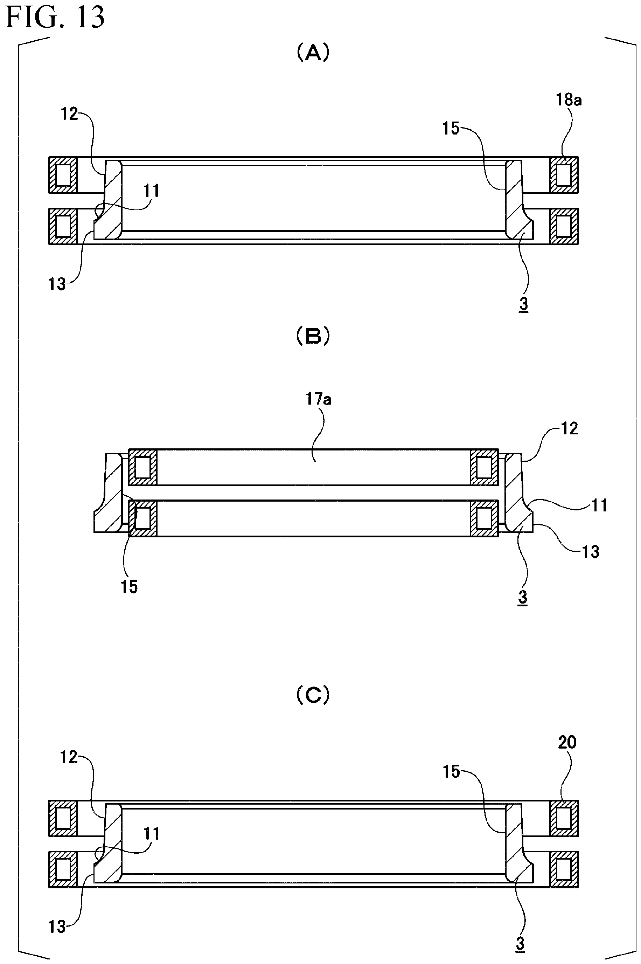

The sixth embodiment of the present invention will be described with reference to FIG. 13. In the present embodiment, the step of induction-heating the inner ring 3 is performed in the order of the outward side heating step shown in FIG. 13(A) and the inward side heating step shown in FIG. 13(B) and further includes a reheating step of induction-heating the inner ring 3 from the radially outward side as shown in FIG. 13(C), which is performed thereafter.

In the reheating step, as shown in FIG. 13(C), a reheating outside coil (a reheating radially outward induction heating coil, a reheating outside induction coil, a reheating outer coil) 20 is disposed at the radially outward position of the inner ring 3, and in a state in which the induction coil is not disposed at the radially inward position of the inner ring 3, the inner ring 3 is induction-heated from the radially outward side by electrifying the outside coil 20. In the present embodiment, the inner circumferential surface of the outside coil 20 and the cylindrical surface portion 13 provided on the outer circumferential surface of the inner ring 3 closely face each other.

In the present embodiment, the entire inner ring 3 can be heated substantially evenly and efficiently by suitably setting each of the heating conditions in the outward side heating step, the heating conditions in the inward side heating step, and the heating conditions in the reheating step.

In the present embodiment, since the step of induction-heating the inner ring 3 is performed in the order of the outward side heating step and the inward side heating step and further includes a reheating step of induction-heating the inner ring 3 from the radially outward side, which is performed thereafter, the entire inner ring 3 can be substantially evenly heated more reliably.

In the present embodiment, after the outward side heating step and the inward side heating step are performed in this order, the reheating step of induction-heating the inner ring 3 from the radially outward side is performed. Even when the temperature of a part of the inner ring 3 on the radially outward side has dropped while being conveyed for the inward side heating step from the outward side heating step, the temperature can be raised to the target temperature by reheating the part, and the temperature of the entire inner ring 3 can be substantially evenly adjusted. Constitutions and operational effects of other parts are similar to those of the first embodiment, the third embodiment, and the fourth embodiment.

### [Seventh embodiment]

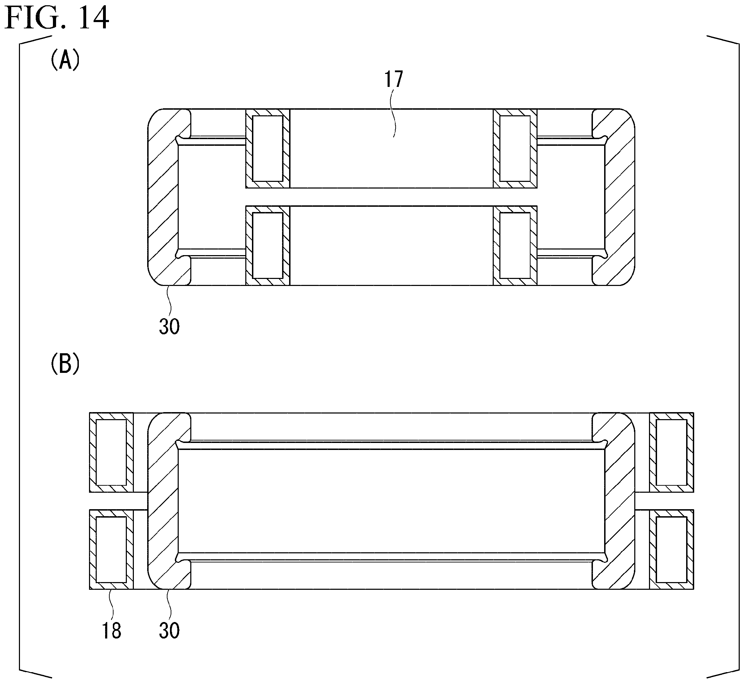

A seventh embodiment of the present invention will be described with reference to FIG. 14.

In the present embodiment, as shown in the part (A) and the part (B) of FIG. 14, the effective lengths of the induction coils 17 and 18 are approximately the same as the axial length of a ring-shaped member 30. When the axial length of the ring-shaped member 30 and the effective lengths of the induction coils 17 and 18 are the same, a magnetic field is unlikely to infiltrate into the axial end surface of the ring-shaped member 30, and there is a probability that the inside in the radial direction will be unlikely to be heated on the axial end surface. In this case, as necessary, through the reheating step, the ring-shaped member 30 is additionally heated. Meanwhile, when the difference in wall thickness of the ring-shaped member 30 in the radial direction is relatively small, an influence due to infiltration of a magnetic field is small, and therefore heating can be performed relatively evenly without providing a reheating step.

In the present embodiment, the first heating step of induction-heating the ring-shaped member 30 is performed by supplying a current to the inside coil 17 such that at least a part of the ring-shaped member 30 reaches the first target temperature. Thereafter, the second heating step of induction-heating the ring-shaped member 30 is performed by supplying a current to the outside coil 18 such that at least a part of the ring-shaped member 30 reaches the second target temperature higher than the first target temperature. Constitutions and operational effects of other parts are similar to those of the embodiments described above.

### [Eighth embodiment]

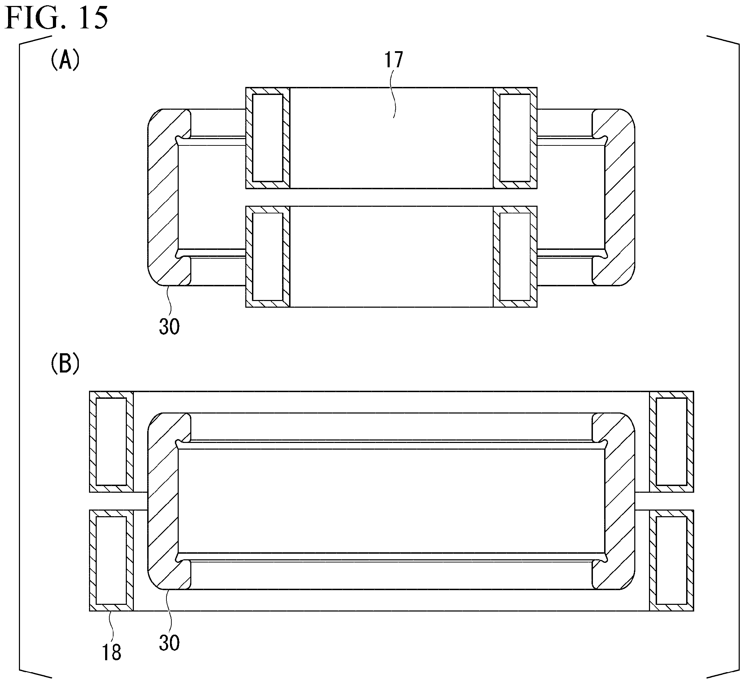

An eighth embodiment of the present invention will be described with reference to FIG. 15.

In the present embodiment, as shown in the part (A) and the part (B) of FIG. 15, the effective lengths of the induction coils 17 and 18 are larger than the axial length of the ring-shaped member 30. For example, the effective lengths of the induction coils are set to 110%, 120%, 130%, 140%, or 150% or more of the axial length of the ring-shaped member 30. When the effective lengths of the induction coils 17 and 18 are larger than the axial length of the ring-shaped member 30, a magnetic field is likely to infiltrate into the axial end surface of the ring-shaped member 30 so that the inside of the ring-shaped member 30 is heated on the axial end surface as well. As a result, the ring-shaped member 30 is likely to be evenly heated over the entire cross section. Constitutions and operational effects of other parts are similar to those of the embodiments described above.

### [Ninth embodiment]

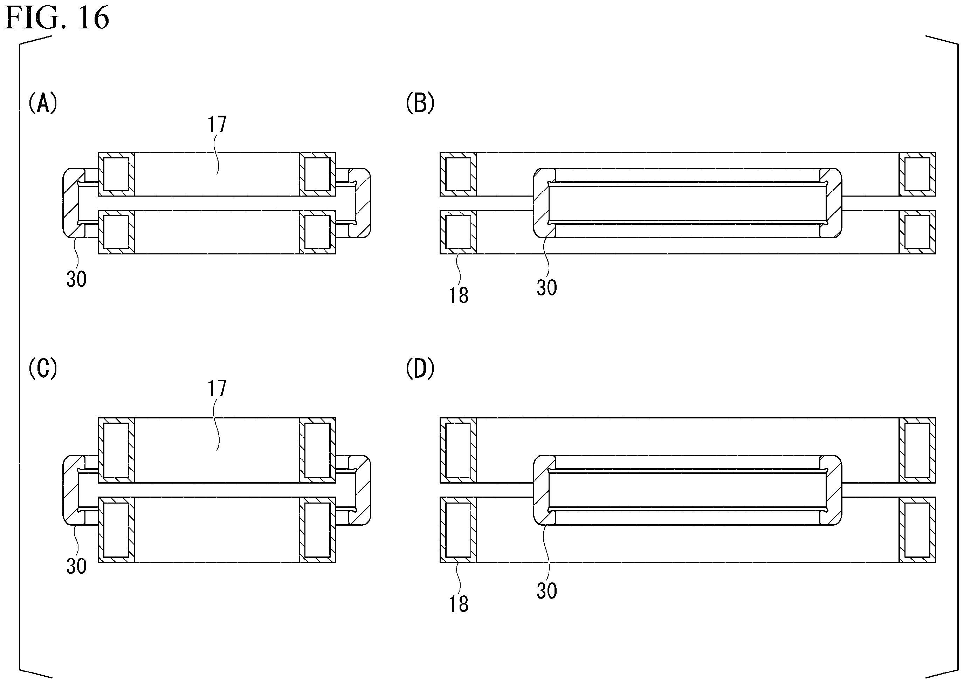

A ninth embodiment of the present invention will be described with reference to FIG. 16.

In the present embodiment, as shown in the part (A), the part (B), the part (C), and the part (D) of FIG. 16, the effective lengths of the induction coils 17 and 18 are larger than the axial length of the ring-shaped member 30. For example, the effective lengths of the induction coils are set to 160%, 170%, 180%, 190%, 200%, 210%, 220%, 230%, 240%, 250%, 260%, 270%, 280%, 290%, or 300% or more of the axial length of the ring-shaped member 30. In the present embodiment, similar to the eighth embodiment, a magnetic field is likely to infiltrate into the axial end surface of the ring-shaped member 30 so that the inside of the ring-shaped member 30 is heated on the axial end surface as well. As a result, the ring-shaped member 30 is likely to be evenly heated over the entire cross section.

In the present embodiment, the dimensional difference between the effective lengths of the induction coils 17 and 18 and the axial length of the ring-shaped member 30 is larger than that of the eighth embodiment. The ring-shaped member 30 can be evenly heated within approximately the same heating time as that of the eighth embodiment by setting a relatively small value of a current supplied to the induction coils 17 and 18.

In the present embodiment, a core member constituted of a magnetic material is additionally provided. For example, the core member is provided on the inward side (a position near the inner circumferential surface) of the inside coil 17 and/or at positions near both the axial end surfaces of the inside coil 17. In addition, the core member is provided on the outward side (a position near the outer circumferential surface) of the outside coil 18 and at positions near both the axial end surfaces of the outside coil 18. Improvement in heating efficiency can be achieved by installing the core member.

In the present embodiment, since the dimensional difference between the effective lengths of the induction coils 17 and 18 and the axial length of the ring-shaped member 30 is relatively large, the tolerance level for shape change and positional unevenness of the ring-shaped member 30 is relaxed so that versatility of the induction coils 17 and 18 is enhanced. A plurality of ring-shaped members having diverse shapes can be heat-treated using one kind of the induction coils 17 and 18. The replacement frequency of the inside coil 17 and the outside coil 18 is reduced. For example, it is particularly preferably applied to manufacturing of the ring-shaped members 30 in a multi-product small lot.

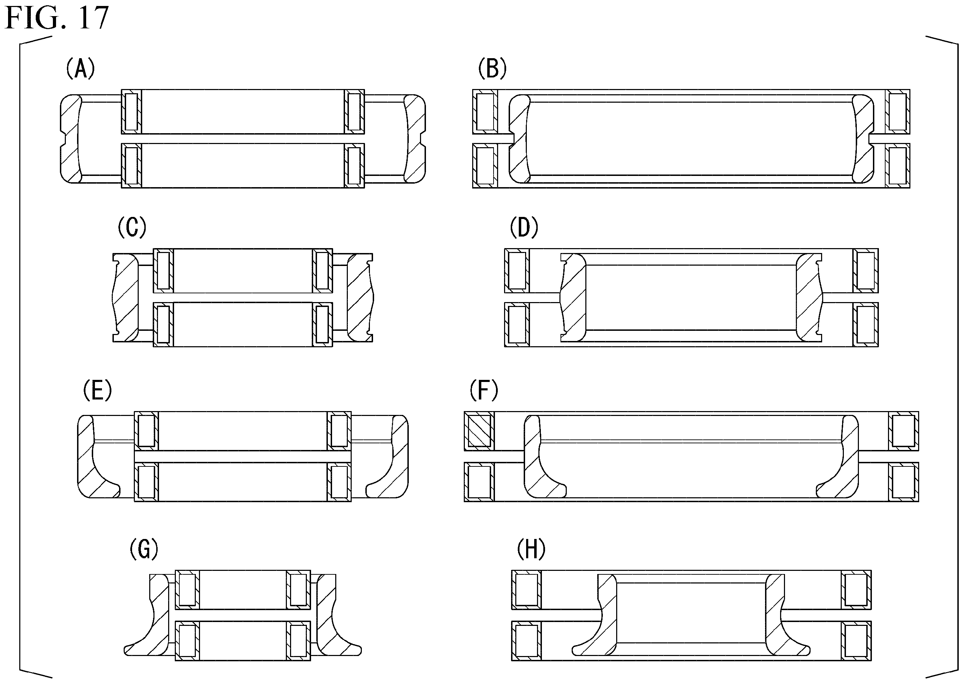

According to the embodiments described above, as shown in FIG. 17, a plurality of ring-shaped members having diverse shapes can be subjected to heat treatment. Heat treating using highly versatile induction coils is advantageous to reduction in manufacturing costs.

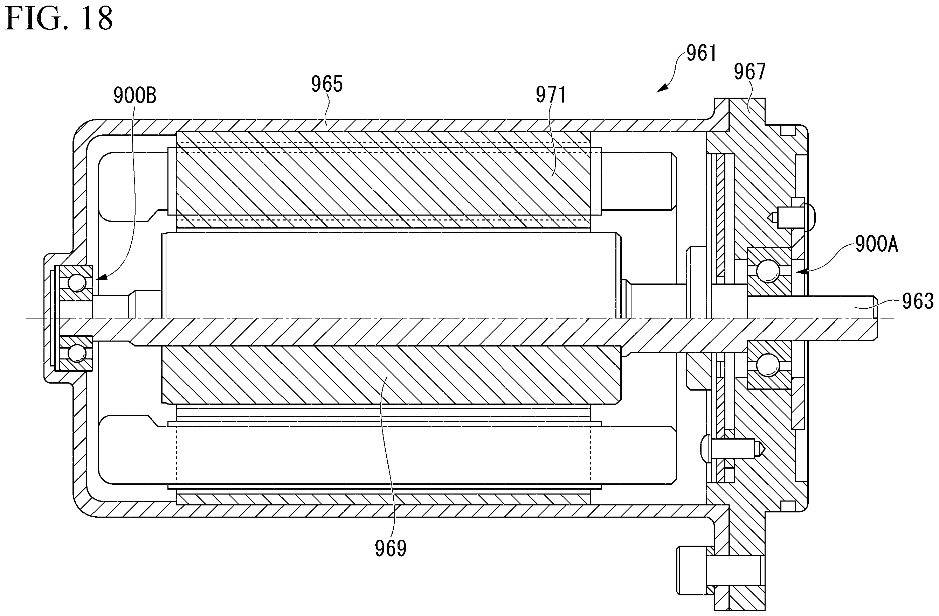

For example, the ring-shaped member can be applied to bearings 900A and 900B and the like for supporting a rotation shaft 963 of a motor 961 shown in FIG. 18.

In FIG. 18, the motor 961 is a brushless motor and has a cylindrical center housing 965, and a substantially disk-shaped front housing 967 blocking an opening end portion of this center housing 965 on one side. On the inward side of the center housing 965, the rotatable rotation shaft 963 is supported via the bearings 900A and 900B disposed in bottom portions of the front housing 967 and the center housing 965 along axial centers thereof. A motor driving rotor 969 is provided around the rotation shaft 963, and a stator 971 is fixed to the inner circumferential surface of the center housing 965.

The motor 961 is generally mounted in a machine or a vehicle and rotatively drives the rotation shaft 963 supported by the bearings 900A and 900B.

Bearing elements or bearings can be applied to rotation support portions of linear motion apparatuses such as machines having a rotation portion, various manufacturing apparatuses, for example, screw apparatuses such as ball screw apparatuses, and actuators (combinations of a linear guide bearing and a ball screw, XY-tables, and the like). In addition, bearing elements or bearings can be applied to steering apparatuses such as wipers, power windows, electric doors, electric seats, steering columns (for example, electric tilt telescopic steering columns), universal joints, intermediate gears, rack-and-pinions, electric power steering devices, and worm reducers. Moreover, bearing elements or bearings can be applied to various vehicles such as automobiles, motorcycles, and railroad cars. A bearing having the present constitution can be favorably applied to any location where relative rotation occurs, which can lead to improvement in product quality and low reduction.

Diverse kinds of bearings such as rolling bearings and sliding bearings can be favorably applied as bearings including a ring-shaped member. For example, bearing elements can be applied to outer rings and inner rings of radial rolling bearings, outer rings and inner rings of radial cylindrical roller bearings using a cylindrical roller (including a needle), and outer rings and inner rings of radial conical roller bearings using a conical roller.

The embodiments described above can be performed in suitable combinations as long as there is no contradiction. In addition, the technical scope of the present invention is not limited to the ranges described in the embodiments. Diverse change or improvement can be added to the embodiments. Forms having such change or improvement added thereto may also be included in the technical scope of the present invention. In addition, an arbitrary combination of these constitutions may also be adopted without being limited to the embodiments.

### [Reference Signs List]

1 Radial rolling bearing
2, 2a, 2b Outer ring
3 Inner ring
4 Rolling body
5 Outer ring raceway
6 Inclined surface portion
7 Cylindrical surface portion
8a, 8b Chamfered portion
9 Cylindrical surface portion
10a, 10b Chamfered portion
11 Inner ring raceway
12 Inclined surface portion
13 Cylindrical surface portion
14a, 14b Chamfered portion
15 Cylindrical surface portion
16a, 16b Chamfered portion
17, 17a Inside coil
18, 18a Outside coil
19 Reheating inside coil
20 Reheating outside coil

## Claims

1. An induction heating method for a ring-shaped member comprising:
a step of induction-heating a ring-shaped member by supplying a current to an induction coil,
wherein the induction heating step includes
induction-heating the ring-shaped member using the induction coil disposed at a radially inward position of the ring-shaped member in a state in which no substantial coil is disposed at a radially outward position of the ring-shaped member, or
induction-heating the ring-shaped member using the induction coil disposed at a radially outward position of the ring-shaped member in a state in which no substantial coil is disposed at a radially inward position of the ring-shaped member, and
an effective length of the induction coil is set to be larger than an axial length of the ring-shaped member.

2. The induction heating method according to claim 1,
wherein the effective length of the induction coil is set to be 110% or more of the axial length of the ring-shaped member.

3. The induction heating method according to claim 1,
wherein the effective length of the induction coil is set to be 200% or more of the axial length of the ring-shaped member.

4. The induction heating method according to any one of claims 1 to 3,
wherein the induction heating step includes
induction-heating the ring-shaped member using an inner coil serving as the induction coil disposed at the radially inward position of the ring-shaped member in a state in which no substantial coil is disposed at the radially outward position of the ring-shaped member, and
induction-heating the ring-shaped member using an outer coil serving as the induction coil disposed at the radially outward position of the ring-shaped member in a state in which no substantial coil is disposed at the radially inward position of the ring-shaped member.

5. The induction heating method according to claim 4 further comprising:
a first heating step of induction-heating the ring-shaped member by supplying a current to one coil among the inner coil and the outer coil such that at least a part of the ring-shaped member reaches a first target temperature; and
a second heating step of induction-heating the ring-shaped member by supplying a current to another coil among the inner coil and the outer coil after the first heating step such that at least a part of the ring-shaped member reaches a second target temperature higher than the first target temperature.

6. The induction heating method according to claim 5,
wherein the one coil used in the first heating step is disposed adjacent to a first surface among an inner surface and an outer surface of the ring-shaped member, the first surface having relatively significant change in surface height, and
the another coil used in the second heating step is disposed adjacent to a second surface among the inner surface and the outer surface of the ring-shaped member, the second surface having a relatively uniform surface height.

7. The induction heating method according to any one of claims 1 to 6 further comprising:
a step of reheating the ring-shaped member after the induction heating step.

8. An induction heating method comprising:
a step of preparing a first coil disposed at a radially inward position of a ring-shaped member and a second coil disposed at a radially outward position of the ring-shaped member;
a first heating step of induction-heating the ring-shaped member by supplying a current to one coil among the first coil and the second coil such that at least a part of the ring-shaped member reaches a first target temperature; and
a second heating step of induction-heating the ring-shaped member by supplying a current to another coil among the first coil and the second coil after the first heating step such that at least a part of the ring-shaped member reaches a second target temperature higher than the first target temperature.

9. The induction heating method according to claim 8,
wherein the one coil used in the first heating step is disposed adjacent to a first surface among an inner surface and an outer surface of the ring-shaped member, the first surface having relatively significant change in surface height, and
the another coil used in the second heating step is disposed adjacent to a second surface among the inner surface and the outer surface of the ring-shaped member, the second surface having a relatively uniform surface height.

10. The induction heating method according to claim 8 or 9,
wherein at least one of the first heating step and the second heating step is executed in a state in which both the first coil and the second coil are disposed adjacent to the ring-shaped member.

11. The induction heating method according to claim 8 or 9,
wherein at least one of the first heating step and the second heating step is executed in a state in which only one of the first coil and the second coil is disposed adjacent to the ring-shaped member.

12. A manufacturing method for a ring-shaped member comprising:
heat-treating a ring-shaped member using the induction heating method according to any one of claims 1 to 11.

13. A ring-shaped member manufactured using the manufacturing method according to claim 12.

14. A manufacturing method for a bearing comprising:
heat-treating a ring-shaped member of a bearing using the induction heating method according to any one of claims 1 to 11.

15. A bearing manufactured using the manufacturing method according to claim 14.

16. A manufacturing method for a vehicle including a ring-shaped member, the method comprising:
heat-treating the ring-shaped member using the induction heating method according to any one of claims 1 to 11.

17. A manufacturing method for a mechanical device including a ring-shaped member, the method comprising:
heat-treating the ring-shaped member using the induction heating method according to any one of claims 1 to 11.

18. An induction heating apparatus of induction-heating a ring-shaped member, the induction heating apparatus comprising:
an induction coil; and
a power source device that supplies a current to the induction coil,
wherein the induction coil is disposed at a radially inward position of the ring-shaped member in a state in which no substantial coil is disposed at a radially outward position of the ring-shaped member, or disposed at the radially outward position of the ring-shaped member in a state in which no substantial coil is disposed at the radially inward position of the ring-shaped member, and
an effective length of the induction coil is set to be the same as or set to be larger than an axial length of the ring-shaped member.

19. An induction heating apparatus of induction-heating a ring-shaped member, the induction heating apparatus comprising:
a first coil that is disposed at a radially inward position of the ring-shaped member;
a second coil that is disposed at a radially outward position of the ring-shaped member; and
a power source device that supplies a current to the first coil and the second coil,
wherein the power source device includes a first mode of induction-heating the ring-shaped member by supplying a current to one coil among the first coil and the second coil such that at least a part of the ring-shaped member reaches a first target temperature, and a second mode of induction-heating the ring-shaped member by supplying a current to another coil among the first coil and the second coil such that at least a part of the ring-shaped member reaches a second target temperature higher than the first target temperature.
